# FASCICULE DE BREVET EUROPEEN

(11) **EP 1 136 309 B1**
(45) Date de publication et mention de la délivrance du brevet: **15.11.2006**
(21) Numéro de dépôt: 01400758.7
(22) Date de dépôt: 23.03.2001
(51) Int. Cl.: F16D 48/06, F16H 61/28

(54) **Dispositif de commande hydraulique de changements de vitesses d'une boite de vitesses de véhicule automatique**
Hydraulische Steueranordnung für Gangschaltung in einem Automatikgetriebe eines Fahrzeugs
Hydraulic control apparatus for gear shifting in a vehicle automatic transmission

(30) Priorité: 24.03.2000 FR 0003763
(43) Date de publication de la demande: 26.09.2001
(73) Titulaire: Renault s.a.s., 92100 Boulogne Billancourt (FR)
(72) Inventeur: Buannec, Michel, 92000 Nanterre (FR)

(56) Documents cités:
- DE-A- 4 324 063
- DE-A- 19 637 001
- DE-A- 19 723 393
- FR-A- 2 771 785
- US-A- 5 992 590

## Description

La présente invention concerne un dispositif de commande hydraulique de changements de vitesses d'une boîte de vitesses de véhicule automobile.

Les dispositifs de commande hydraulique de boîtes de vitesses comprennent en général un vérin de commande de l'embrayage placé entre le moteur et l'arbre d'entrée de la boîte ainsi qu'une unité d'actionnement placée à l'intérieur ou à l'extérieur de la boîte de vitesses, qui comprend des vérins de commande de sélection et de passage des rapports de vitesses qui agissent sur des axes portant des fourchettes adaptées pour déplacer des pignons fous de crabotage des vitesses sélectionnées.

Par la publication DE 196 37 001, on connaît une telle boîte de vitesses, reliée par un embrayage d'entrée à un moteur de véhicule, dans laquelle la manoeuvre de l'embrayage et des actionneurs de sélection et de passage de vitesses est confiée à une unité de commande hydraulique, qui effectue automatiquement les changements de rapport.

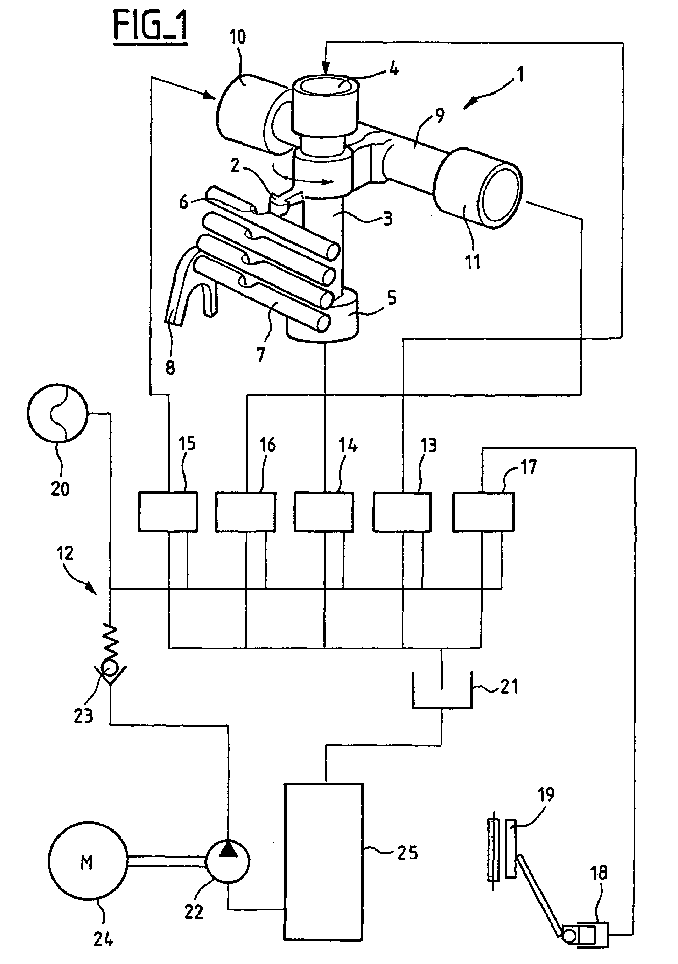

En se reportant à la figure 1, on voit qu'une unité d'actionnement 1 connue comprend un doigt 2 de passage de vitesses susceptible d'être déplacé selon un axe 3 de sélection de vitesses grâce à deux vérins opposés 4 et 5 de façon à être engagé sélectivement dans des encoches latérales 6 de quatre axes 7 portant des fourchettes 8. Le doigt 2 est également susceptible d'être déplacé selon un axe 9 de passage de vitesses grâce à deux vérins opposés 10 et 11 de façon à déplacer axialement les axes 7 dans un sens ou dans l'autre.

Pour faire fonctionner l'unité d'actionnement 1, il est courant et habituel d'utiliser une unité de commande hydraulique 12 qui comprend des électrovannes modulantes 13 et 14 reliées aux vérins d'actionnement 4 et 5, des électrovannes tout ou rien 15 et 16 reliées aux vérins d'actionnement 10 et 11 et une électrovanne de modulation 17 reliée à un vérin 18 de l'embrayage 19. En complément, les électrovannes précitées sont reliées d'une part à un accumulateur de pression hydraulique 20 et d'autre part à un réservoir de retour 21, la pression hydraulique étant fournie par une pompe 22 au travers d'un clapet anti-retour 23, actionné par un moteur électrique 24 et la pompe 22 étant reliée au réservoir 21 au travers d'un filtre 25.

On s'aperçoit que l'unité de commande hydraulique 12 est relativement complexe et engendre en conséquence un encombrement important et un coût de production élevé.

Le but de la présente invention est de réduire les inconvénients ci-dessus.

Pour celà, l'invention propose un dispositif de commande hydraulique de changements de vitesses d'une boîte de vitesses comprenant des moyens hydrauliques d'actionnement d'un embrayage et des moyens hydrauliques de sélection/passage des vitesses, qui comprend un vérin pousseur hydraulique comprenant des première et seconde chambres à variations simultanées et dans le même sens de leur volume, dont la première chambre est reliée auxdits moyens hydrauliques d'actionnement de l'embrayage ; des moyens pour actionner sélectivement l'organe mobile dudit vérin pousseur ; une électrovanne de distribution sélectrive à deux voies dont une entrée est reliée à ladite seconde chambre dudit vérin pousseur et dont les deux sorties sont respectivement reliées auxdits moyens hydrauliques de sélection/passage des vitesses pour activer sélectivement ces derniers ; une électrovanne d'échappement sélectif de fluide reliée à ladite seconde chambre dudit vérin pousseur ; et un organe by-pass d'échappement sélectif de fluide relié auxdits moyens hydrauliques de sélection/passage des vitesses.

Selon l'invention, lesdits moyens hydrauliques de sélection/passage des vitesses peuvent avantageusement comprendre au moins un vérin d'actionnement relié à un organe de sélection de vitesses et au moins un vérin d'actionnement relié à un organe de passage de vitesses.

Selon l'invention, lesdits moyens hydrauliques de sélection/passage des vitesses peuvent avantageusement comprendre une multiplicité de vérins d'actionnement reliés respectivement à des organes de changement de vitesses.

Selon l'invention, lesdits organes sont de préférence immobilisables par des doigts de verrouillage escamotables.

Lesdits moyens pour actionner l'organe mobile dudit vérin pousseur peuvent avantageusement comprendre un moteur électrique reliées à cet organe par un système vis-écrou.

Selon l'invention, une électrovanne d'échappement est de préférence reliée à ladite première chambre dudit vérin pousseur.

Selon l'invention, un clapet de surpression est de préférence relié à ladite première chambre dudit vérin pousseur.

Selon l'invention, lesdits moyens pour actionner l'organe mobile dudit vérin pousseur sont de préférence modulables ou réglables.

La présente invention sera mieux comprise à l'étude de dispositifs de commande hydraulique de changements de vitesses d'une boîte de vitesses d'un véhicule automobile, décrit à titre d'exemple non limitatif et illustré par le dessin sur lequel :
- la figure 1 représente l'unité d'actionnement 1 et l'unité de commande hydraulique 12 de l'état de la technique, décrite précédemment ;
- la figure 2 représente schématiquement un dispositif de commande hydraulique selon la présente invention, dans une première application ;
- et la figure 3 représente le dispositif de commande hydraulique de la figure 2, dans une seconde application.

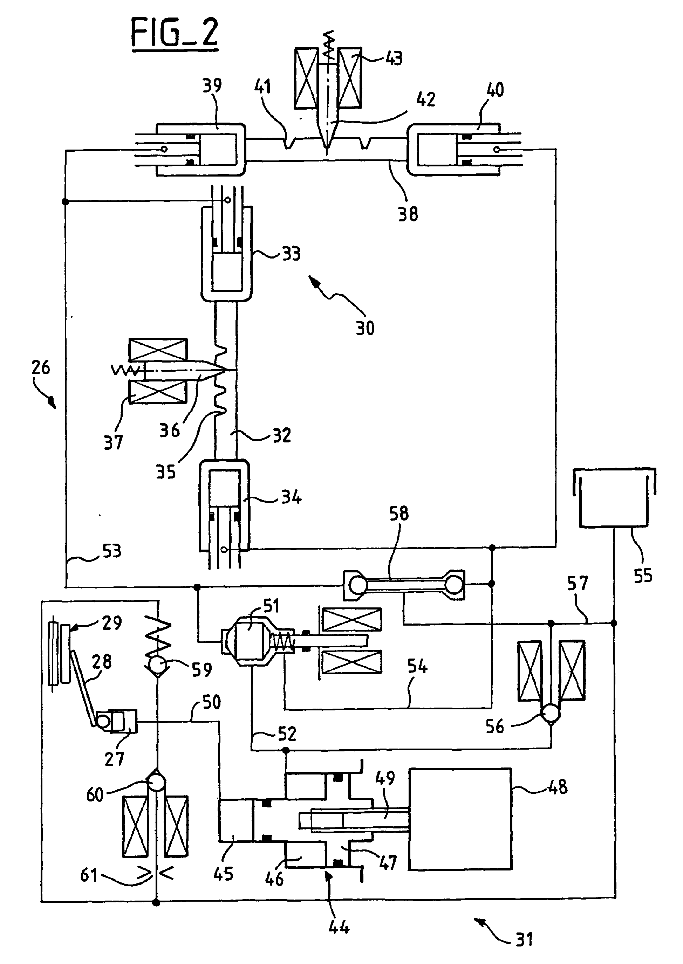

En se reportant à la figure 2, on voit qu'on a représenté un dispositif 26 de commande hydraulique de changements de vitesses d'une boîte de vitesses non représentée, qui comprend d'une part un vérin d'actionnement 27 susceptible d'agir sur l'organe mobile 28 d'un embrayage 29 et d'autre part une unité actionnement 30 associée à la boîte de vitesses, à l'intérieur ou à l'extérieur et susceptible d'agir pour changer les rapports de vitesses de cette dernière.

Le dispositif de commande hydraulique 26 comprend en outre une unité de commande hydraulique 31 permettant de commander sélectivement le vérin d'actionnement 27 et l'unité d'actionnement 30.

Dans l'exemple représenté sur la figure 2, l'unité d'actionnement 30 comprend, comme dans l'exemple décrit en référence à la figure 1, un axe de sélection 32 déplaçable axialement grâce à deux vérins d'actionnement 33 et 34, la tige 32 présentant des encoches latérales 35 d'indexation de rapports de vitesses, dans lesquelles peut s'engager sélectivement un doigt de verrouillage de sélection 36 actionné par un électro-aimant 37.

L'unité d'actionnement 30 comprend en outre un axe 38 de passage de vitesses déplaçable axialement grâce à deux vérins d'actionnement opposés 39 et 40, l'axe 38 présentant latéralement des encoches 41 dans lesquelles peut s'engager sélectivement un doigt d'indexation 42 actionné par un électro-aimant 43.

L'unité de commande hydraulique 31 comprend un vérin pousseur hydraulique 44 qui présente deux chambres 45 et 46 dont les volumes varient simultanément et dans le même sens par déplacement d'un piston 47 relié à un moteur électrique d'actionnement 48 grâce à un système vis-écrou 49.

La chambre 45 du vérin pousseur 44 est reliée au vérin 27 de l'embrayage 29 par l'intermédiaire d'un conduit 50.

L'unité de commande hydraulique 31 comprend en outre une électrovanne 51 à deux voies, dont l'entrée est reliée à la chambre 46 du vérin pousseur 44 par un conduit 52 et dont l'une des sorties est reliée aux vérins 33 et 39 de l'unité d'actionnement 30 par l'intermédiaire d'un conduit 53 et son autre sortie est reliée aux vérins 34 et 40 par l'intermédiaire d'un conduit 54.

L'unité de commande hydraulique 31 comprend également une électrovanne 56 reliée d'une part à la chambre 46 du vérin pousseur 44 par l'intermédiaire du conduit 52 et d'autre part à un réservoir 55 par l'intermédiaire d'un conduit de retour 57, ainsi qu'un organe by-pass 58 à deux voies dont les entrées sont reliées respectivement aux conduits 53 et 54 et la sortie est reliée au conduit de retour 57.

Entre le conduit 50 et le conduit de retour 57, l'unité de commande hydraulique 31 comprend en outre, en parallèle, d'une part un clapet de surpression 59 et d'autre part une électrovanne de sécurité 60 et un gicleur de fuite calibré 61.

On va maintenant décrire comment peut fonctionner le dispositif de commande hydraulique 26 représenté sur la figure 2.

Dans cet exemple, la boîte de vitesses comprend six rapports de vitesses en marche avant et un rapport de vitesse en marche arrière. Aussi, l'axe de sélection de vitesses 32 comprend quatre encoches de sélection 35 dont trois correspondent chacune à la sélection de deux rapports de vitesses et la quatrième à la sélection de la marche arrière. L'axe de passage 38 comprend trois encoches 41 dont une encoche centrale correspondant à un point neutre et deux encoches opposées permettant d'engager les vitesses sélectionnées et la marche arrière.

Dans une situation de départ, le doigt de sélection 36 est engagé dans une encoche 35 de la tige de sélection 32 et le doigt de passage 42 est engagé dans l'encoche 41 centrale ou de point neutre de la tige de passage 38. Aucun rapport de vitesses n'est enclenché.

Dans une première étape, l'électrovanne 52 est ouverte ; l'électrovanne 60 est fermée ; et le moteur 48 est actionné afin de déplacer vers l'avant le piston 47 du vérin pousseur 46, dans le sens de la réduction de volume des chambres 45 et 46. En conséquence, d'une part le fluide de la chambre 45 s'écoule via le conduit 50 vers le vérin 27 qui actionne l'embrayage 39 dans le sens de son débrayage et d'autre part le fluide contenu dans la chambre 46 s'écoule via le conduit 52, l'électrovanne 56 ouvert et le conduit de retour 57 vers le réservoir 55.

Dans une étape suivante, l'électrovanne 56 se ferme. La chambre 46 se met sous pression ainsi que le conduit 52. L'électro-aimant 37 est commandé pour escamoter le doigt 36 ; l'électrovanne à deux voies 51 est commandée pour se placer dans une première position de façon à mettre en communication la chambre 46 du vérin pousseur 44 soit avec les vérins 33 et 39 via les conduits 52 et 53 soit avec les vérins 34 et 40 via les conduits 52 et 54 ; et l'organe by-pass 58 est commandée pour se placer dans une première position de façon à mettre en communication, de façon opposée à l'électrovanne 51, le réservoir 55 avec soit les vérins 34 et 40 via les conduits 54 et 57 soit les vérins 33 et 39 via les conduits 53 et 57.

Le piston 47 du vérin pousseur 44 poursuivant son avancée, le fluide s'échappant de la chambre 46 actionne l'un des vérins 33 ou 34 tandis que le fluide de l'autre s'échappe vers le réservoir 55. L'axe de sélection 32 se trouve ainsi déplacé dans le sens correspondant. Les vérins 39 et 40 ne sont pas actionnés du fait que l'axe de passage 38 est immobilisé par le doigt de verrouillage 42.

Dans une étape suivante, lorsque l'axe de sélection 32 atteint une position souhaitée, l'électro-aimant 37 est commandé de façon à relâcher le doigt de verrouillage 36 qui s'engage dans une encoche 35 de façon à immobiliser cet axe de sélection 32 dans sa position présélectionnée. On arrête un court instant l'avancée du vérin 47 pour ne plus avoir de pression dans le canal 52.

Dans une étape suivante, l'électrovanne à deux voies 51 et l'organe by-pass 58 sont commandés de façon à les placer à leurs secondes positions dans lesquelles s'établissent des communications symétriques par rapport à celles décrites précédemment ; et le doigt 42 est escamoté.

Le piston 47 du vérin pousseur 44 reprend son avancée, le vérin 39 ou 40 est activé via l'électrovanne 41 et le fluide contenu dans l'autre vérin est transféré vers le réservoir 55 via l'organe by-pass 58, de telle sorte que l'axe de passage 38 dans le sens correspondant. Les vérins 33 et 34 ne sont pas actionnés du fait que le doigt de verrouillage 36 est en prise avec l'axe de sélection 32.

Dans une étape suivante, lorsque l'axe de passage atteint sa position extrème sélectionnée, l'électro-aimant 43 est commandé de façon à relâcher le doigt de verrouillage 42 qui s'engage dans une encoche 341 de façon à immobiliser cet axe de sélection 32 dans sa position présélectionnée.

D'une façon générale, chaque fois que l'électro-vanne 51 doit être activée, on arrête l'avancée du vérin 47 de manière à faire chuter la pression dans le canal 52

Lors des étapes ci-dessus d'actionnement de axe de sélection 32 et de l'axe de passage 38, le fluide continuant de s'échapper de la chambre 45 est transféré vers le réservoir via le clapet de surpression 59 réglé à une pression telle que le vérin 27 est maintenu dans une position de maintien en position débrayée de l'embrayage 29.

Dans une étape suivante, le moteur 48 est actionné de façon à ramener le piston 47 du vérin pousseur 44 à sa position d'origine, provoquant le relâchement de la pression dans le vérin 27 pour replacer l'embrayage 29 dans sa position embrayée.

Par ailleurs, en cas de difficulté d'actionnement, l'électrovanne 60 peut être commandée pour libérer la pression dans la chambre 45, au travers du gicleur 61.

Bien entendu, les chambres 45 et 46 du vérin pousseur 44 sont alimentées en fluide par des moyens classiques non représentés, notamment de façon à remplir ces chambres lors du recul de son piston 47.

Il résulte de ce qui précède que la commande sélective du vérin pousseur 47, de l'électrovanne 51, de l'organe by-pass 58 et des électro-aimants 37 et 43, éventuellement en association avec des capteurs de position de l'axe de sélection 32 et de l'axe de passage 38, permet de commander la boîte de vitesses de façon à atteindre un rapport de vitesses sélectionné. L'actionnement du vérin 27 d'embrayage et sélectivement des vérins de l'unité d'actionnement 30 permet en effet de provoquer les différentes sélections associées aux encoches 35 de la tige 32 et les différents passages associés aux encoches 41 de la tige de passage 38.

En outre, en contrôlant et faisant varier la vitesse de rotation du moteur 48, il est possible de faire varier la vitesse de déplacement du piston 47 du vérin pousseur 44 de façon à moduler les commandes hydrauliques du vérin d'embrayage 27 et des vérins d'actionnement de l'unité d'actionnement 30 le long de la course d'avance et de recul du piston 47.

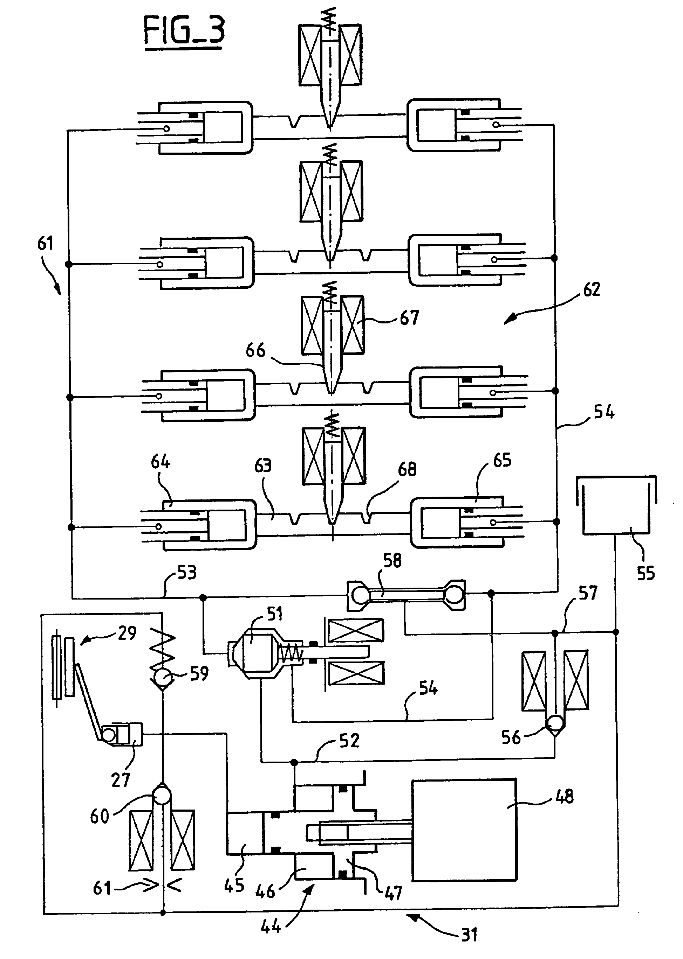

En se reportant à la figure 3, on voit qu'on a représenté un dispositif de commande hydraulique 61 qui comprend, à l'identique de celui de la figure 2, une unité de commande hydraulique 31 et un vérin d'actionnement 27 d'un embrayage 29.

Le dispositif de commande hydraulique 61 comprend cependant une unité d'actionnement 62 différente de celle du dispositif de commande hydraulique 26.

Cette unité d'actionnement 62 comprend quatre axes de passage de vitesses 63 déplaçables axialement dans un sens ou dans l'autre par l'intermédiaire respectivement de deux vérins opposés 64 et 65, ainsi que quatre doigts de verrouillage 66 actionnables par des électro-aimants 67 et susceptibles de coopérer avec des encoches latérales 68 des axes 63.

Dans l'exemple représenté, trois des axes de passage 68 présentent trois encoches 68, dont une encoche centrale correspond à un point neutre ou mort et deux encoches placées de part et d'autre de l'encoche centrale correspondent à deux rapports vitesses en marche avant. Le quatrième axe de passage 68 présente deux encoches dont une correspond à un point neutre ou mort et l'autre correspond à un rapport de vitesse en marche arrière.

Le conduit de sortie 53 de l'électrovanne 51 est relié en parallèle aux quatre vérins 64 de l'unité d'actionnement 62, tandis que le conduit 54 de cette unité d'actionnement 62 est relié en parallèle aux quatre vérins 65.

Par conséquent, les étapes d'actionnement de l'unité d'actionnement 30 du dispositif de la figure 2 sont remplacées, dans la variante de la figure 3, par les étapes suivantes.

Lorsque le conduit 53 est relié à la chambre 46 du vérin poussoir 44 via l'électrovanne 51, la poursuite de déplacement du piston 47 est susceptible d'actionner soit l'un quelconque des vérins 64 soit l'un quelconque des vérins 65 via l'électrovanne 51 placée soit à sa première position soit à sa seconde position, tandis que l'organe by-pass 58 est placé de façon correspondante soit à sa première position soit à sa seconde position pour laisser s'écouler le fluide depuis le vérin opposé vers le réservoir 55.

Pour celà, l'un des électro-aimants 67 est activé de manière à escamoter son doigt de verrouillage 66 de façon à autoriser le déplacement dans le sens souhaité de l'axe de passage 63 correspondant afin que cet axe atteigne axialement une position sélectionnée.

Ainsi, comme dans l'exemple décrit en référence à la figure 2, la commande sélective du vérin pousseur 47, de l'électrovanne 51, de l'organe by-pass 58 et des électro-aimants 67, éventuellement en association avec des capteurs de position des axes de passage 68, permet de commander la boîte de vitesses de façon à atteindre un rapport de vitesses sélectionné. L'actionnement sélectif des vérins de l'unité d'actionnement 62 permet en effet de provoquer les différentes sélections associées aux encoches 68 des axes de passage 63.

La présente invention ne se limite pas aux exemples ci-dessus décrits. Bien des variantes de réalisation sont possibles sans sortir du cadre défini par les revendications annexées.

## Revendications

1. Dispositif de commande hydraulique de changements de vitesses d'une boîte de vitesses comprenant des moyens hydrauliques d'actionnement d'un embrayage et des moyens hydrauliques de sélection/passage des vitesses, **caractérisé par le fait qu'**il comprend :
- un vérin pousseur hydraulique (44) comprenant des première et seconde chambres (45, 46) à variations simultanées et dans le même sens de leur volume, dont la première chambre (45) est reliée auxdits moyens hydrauliques d'actionnement (27) de l'embrayage,
- des moyens (48) pour actionner sélectivement l'organe mobile (47) dudit vérin pousseur (44),
- une électrovanne de distribution sélective (51) à deux voies dont une entrée est reliée à ladite seconde chambre dudit vérin pousseur et dont les deux sorties sont respectivement reliées auxdits moyens hydrauliques (30 ; 62) de sélection/passage des vitesses pour activer sélectivement ces derniers,
- une électrovanne (56) d'échappement sélectif de fluide reliée à ladite seconde chambre dudit vérin pousseur (44),
- et un organe by-pass (58) d'échappement sélectif de fluide relié auxdits moyens hydrauliques de sélection/passage des vitesses.

2. Dispositif selon la revendication 1, **caractérisé par le fait que** lesdits moyens hydrauliques de sélection/passage des vitesses comprennent au moins un vérin d'actionnement (33, 34) relié à un organe (32) de sélection de vitesses et au moins un vérin d'actionnement (39, 40) relié à un organe de passage de vitesses (38).

3. Dispositif selon l'une des revendications 1 et 2, **caractérisé par le fait que** lesdits moyens hydrauliques de sélection/passage des vitesses comprennent une multiplicité de vérins d'actionnement (64, 65) reliés respectivement à des organes de changement de vitesses (63).

4. Dispositif selon l'une des revendications 2 et 3, **caractérisé par le fait que** lesdits organes sont immobilisables par des doigts de verrouillage escamotables (36, 42 ; 66).

5. Dispositif selon l'une quelconque des revendications précédentes, **caractérisé par le fait que** lesdits moyens pour actionner l'organe mobile dudit vérin pousseur (44) comprennent un moteur électrique (58) reliées à cet organe par un système vis-écrou (49).

6. Dispositif selon l'une quelconque des revendications précédentes, **caractérisé par le fait qu'**une électrovanne d'échappement est reliée à ladite première chambre (45) dudit vérin pousseur (44).

7. Dispositif selon l'une quelconque des revendications précédentes, **caractérisé par le fait qu'**un clapet de surpression est relié à ladite première chambre (45) dudit vérin pousseur (44).

8. Dispositif selon l'une quelconque des revendications précédentes, **caractérisé par le fait que** lesdits moyens (48) pour actionner l'organe mobile (47) dudit vérin pousseur (44) sont modulables ou réglables.

## Claims

1. Hydraulic control apparatus for gear changes in a gearbox, comprising hydraulic clutch-actuating means and hydraulic gear selection/gearshift means, **characterized in that** it comprises:
- a hydraulic thruster (44) comprising first and second chambers (45, 46) having simultaneous, equidirectional variations in their volume, whereof the first chamber (45) is connected to the said hydraulic clutch-actuating means (27),
- means (48) for selectively actuating the moving member (47) of the said thruster (44),
- a selective-distribution two-way solenoid valve (51), whereof an inlet is connected to the said second chamber of the said thruster and the two outlets are respectively connected to the said hydraulic gear selection/gearshift means (30; 62) in order to selectively activate the latter,
- a selective fluid discharge solenoid valve (56) connected to the said second chamber of the said thruster (44),and
- a selective fluid discharge bypass member (58) connected to the said hydraulic gear selection/gearshift means.

2. Apparatus according to Claim 1, **characterized in that** the said hydraulic gear selection/gearshift means comprise at least one actuator (33, 34) connected to a gear selection member (32) and at least one actuator (39, 40) connected to a gearshift member (38).

3. Apparatus according to one of Claims 1 and 2, **characterized in that** the said hydraulic gear selection/gearshift means comprise a multiplicity of actuators (64, 65) respectively connected to gear-changing members (63).

4. Apparatus according to one of Claims 2 and 3, **characterized in that** the said members are immovable by retractable locking pins (36, 42; 66).

5. Apparatus according to any one of the preceding claims, **characterized in that** the said means for actuating the moving member of the said thruster (44) comprise an electric motor (58) connected to this member by a screw and nut mechanism (49).

6. Apparatus according to any one of the preceding claims, **characterized in that** a discharge solenoid valve is connected to the said first chamber (45) of the said thruster (44).

7. Apparatus according to any one of the preceding claims, **characterized in that** a pressure relief valve is connected to the said first chamber (45) of the said thruster (44).

8. Apparatus according to any one of the preceding claims, **characterized in that** the said means (48) for actuating the moving member (47) of the said thruster (44) are variable or adjustable.

## Patentansprüche

1. Vorrichtung zur hydraulischen Steuerung von Gangschaltungen eines Schaltgetriebes mit hydraulischen Mitteln zur Betätigung einer Kupplung und mit hydraulischen Mitteln zum Wählen/Einlegen der Gänge, **dadurch gekennzeichnet, dass** sie aufweist:
- einen hydraulischen Schubzylinder (44) mit einer ersten und einer zweiten Kammer (45, 46) mit gleichzeitigen Veränderungen ihres Volumens in der gleichen Richtung, von denen die erste Kammer (45) mit den hydraulischen Betätigungsmitteln (27) der Kupplung verbunden ist,
- Mittel (48) zur selektiven Betätigung des beweglichen Elements (47) des Schubzylinders (44),
- ein Zweiwege-Magnetventil (51) mit selektiver Verteilung, von dem ein Eingang mit der zweiten Kammer des Schubzylinders und die zwei Ausgänge je mit den hydraulischen Mitteln (30; 62) zum Wählen/Einlegen der Gänge verbunden sind, um letztere selektiv zu aktivieren,
- ein Magnetventil (56) mit selektivem Fluidauslass, das mit der zweiten Kammer des Schubzylinders (44) verbunden ist,
- und ein Bypass-Element (58) mit selektivem Fluidauslass, das mit den hydraulischen Mitteln zum Wählen/Einlegen der Gänge verbunden ist.

2. Vorrichtung nach Anspruch 1, **dadurch gekennzeichnet, dass** die hydraulischen Mittel zum Wählen/Einlegen der Gänge mindestens einen Betätigungszylinder (33, 34), der mit einem Gangauswahlelement (32) verbunden ist, und mindestens einen Betätigungszylinder (39, 40) aufweisen, der mit einem Gangeinlegungselement (38) verbunden ist.

3. Vorrichtung nach einem der Ansprüche 1 und 2, **dadurch gekennzeichnet, dass** die hydraulischen Mittel zum Wählen/Einlegen der Gänge mehrere Betätigungszylinder (64, 65) aufweisen, die je mit Gangschaltungselementen (63) verbunden sind.

4. Vorrichtung nach einem der Ansprüche 2 und 3, **dadurch gekennzeichnet, dass** die Elemente von einziehbaren Verriegelungsfingern (36, 42; 66) blockiert werden können.

5. Vorrichtung nach einem der vorhergehenden Ansprüche, **dadurch gekennzeichnet, dass** die Mittel zur Betätigung des beweglichen Elements des Schubzylinders (44) einen Elektromotor (58) aufweisen, der mit diesem Element über ein Schraube-Mutter-System (49) verbunden ist.

6. Vorrichtung nach einem der vorhergehenden Ansprüche, **dadurch gekennzeichnet, dass** ein Auslass-Magnetventil mit der ersten Kammer (45) des Schubzylinders (44) verbunden ist.

7. Vorrichtung nach einem der vorhergehenden Ansprüche, **dadurch gekennzeichnet, dass** ein Überdruckventil mit der ersten Kammer (45) des Schubzylinders (44) verbunden ist.

8. Vorrichtung nach einem der vorhergehenden Ansprüche, **dadurch gekennzeichnet, dass** die Mittel (48) zur Betätigung des beweglichen Elements (47) des Schubzylinders (44) modulierbar oder einstellbar sind.
